# EUROPÄISCHE PATENTSCHRIFT

(11) **EP 1 269 718 B1**
(45) Veröffentlichungstag und Bekanntmachung des Hinweises auf die Patenterteilung: **06.04.2005**
(21) Anmeldenummer: 01929253.1
(22) Anmeldetag: 22.03.2001
(51) Int. Cl.: H04L 29/06

(54) **VERFAHREN ZUR SIGNALISIERUNG UNTERSCHIEDLICHER KOPFINFORMATIONEN**
METHOD FOR SIGNALLING DIFFERENT HEADER INFORMATION
PROCEDE POUR SIGNALER DIFFERENTES INFORMATIONS D'EN-TETE

(30) Priorität: 29.03.2000 DE 10015640
(43) Veröffentlichungstag der Anmeldung: 02.01.2003
(73) Patentinhaber: ROBERT BOSCH GMBH, 70442 Stuttgart (DE)
(72) Erfinder: HANS, Martin, 31141 Hildesheim (DE); KOWALEWSKI, Frank, 38228 Salzgitter (DE); LAUMEN, Josef, 31141 Hildesheim (DE); SCHMIDT, Gunnar, 38304 Wolfenbuettel (DE); BAER, Siegfried, 75179 Pforzheim (DE); BECKMANN, Mark, 38102 Braunschweig (DE); GOTTSCHALK, Thomas, 38126 Braunschweig (DE)
(86) Internationale Anmeldenummer: PCT/DE2001/001115
(87) Internationale Veröffentlichungsnummer: WO 2001/074022

(56) Entgegenhaltungen:
- LOU BERGER, JASON JEFFORDS: "MPLS/IP Header Compression" INTERNET DRAFT, NETWORK WORKING GROUP, [Online] Januar 2000 (2000-01), Seiten 1-12, XP002171580 Gefunden im Internet: <URL:http://sumin.dongeul.ac.kr/mpls/draft -berger-mpls-hdr-comp-00.txt> [gefunden am 2001-07-09]
- CASNER S ET AL: "Compressing IP/UDP/RTP Headers for Low-Speed Serial Links" IETF REQUEST FOR COMMENTS,XX,XX, Februar 1999 (1999-02), Seiten 1-21, XP002164554 in der Anmeldung erwähnt
- FABRI S N ET AL: "Proposed evolution of GPRS for the support of voice services" IEE PROCEEDINGS: COMMUNICATIONS,INSTITUTION OF ELECTRICAL ENGINEERS,GB, Bd. 146, Nr. 5, 14. Oktober 1999 (1999-10-14), Seiten 325-330, XP006013243 ISSN: 1350-2425

## Beschreibung

### Stand der Technik

Die Erfindung geht von einem Verfahren zur Signalisierung unterschiedlicher Kopfinformationen nach der Gattung des Hauptanspruchs aus.

In paketvermittelnden Telekommunikationsnetzen werden Nutzdaten in Paketdateneinheiten von einem Sender zu einem Empfänger übertragen. Die Paketdateneinheiten durchlaufen dabei im Sender eine Anzahl von Protokollschichten, bevor sie letztendlich zum Empfänger über das entsprechende Telekommunikationsnetz versendet werden. Die einzelnen Protokollschichten fügen den eigentlichen Nutzdaten dabei Kopfinformationen in Form sogenannter Protokollkontrolldaten hinzu. Diese werden auch "Header" genannte. Die Kopfinformationen mit den Protokollkontrolldaten und die Nutzdaten bilden dann jeweils eine Paketdateneinheit. Dabei dienen die Protokollkontrolldaten beispielsweise dazu, die jeweilige Paketdateneinheit mit den Nutzdaten durch das Telekommunikationsnetz in Richtung zum Empfänger zu leiten. Für die Protokollkontrolldaten kann dadurch insgesamt eine relativ große Datenmenge zusammenkommen, die zusätzlich zu den Nutzdaten transportiert werden muß. Gerade in Systemen mit beschränkter Bandbreite, wie es beispielsweise in Mobilfunksystemen oder bei Telekommunikationsverbindungen über Modems der Fall ist, beeinträchtigt dies in besonderem Maße die für die Übertragung der Nutzdaten zur Verfügung stehende Datenrate.

Um die Datenmenge der Protokollkontrolldaten zu reduzieren, werden Kompressionsalgorithmen verwendet. Solche Kompressionsalgorithmen sind beispielsweise aus den Dokumenten RFC 1144, Compressing TCP/IP Headers for Low-Speed Serial Links (D1), RFC 2507, IP Header Compression, M. Degermark, B. Nordgren, S. Pink (D2) und RFC 2508, Compressing IP/UDP/RTP Headers for Low-Speed Serial Links (D3) bekannt. Aus D2 ist eine erste Gruppe von Kompressionsund Dekompressionsalgorithmen von IP-Headern (Internet Protocol) in Kombination mit TCP-Headern (Transport Control Protocol) und UDP-Headern (User Dataframe Protocol) bekannt. Aus der D3 ist eine zweite Gruppe von Kompressions- und Dekompressionsalorithmen bekannt, die auf den in D2 beschriebenen Kompressions- und Dekompressionsalgorithmen basieren, jedoch nur für IP/UDP/RTP-Header (RTP = Real Time Protocol) gelten. Werden nun Paketdateneinheiten von einem Sender, der einen Kompressor enthält, zu einem Empfänger, der einen Dekompressor enthält, versendet, so muß dem Dekompressor die Art bzw. der Typ der Kopfinformationen mitgeteilt werden, die er gerade empfängt. Dies wird üblicherweise durch eine entsprechende Signalisierung in Form von zusätzlichen Informationen gewährleistet wie in der Spezifikation "Subnetwork Dependent Convergence Protocol (SNDCP)" beschrieben, die mit der entsprechenden Paketdateneinheit zum Empfänger übertragen werden. Dabei ist für einige Typen von Kopfinformationen mit unterschiedlicher Signalisierung sowohl in der ersten Gruppe von Algorithmen ein erster Dekompressionsalgorithmus als auch in der zweiten Gruppe von Algorithmen ein zweiter Dekompressionsalgorithmus vorgesehen, wobei sich der erste Dekompressionsalgorithmus und der zweite Dekompressionsalgorithmus einander entsprechen.

### Vorteile der Erfindung

Das erfindungsgemäße Verfahren mit den Merkmalen des Hauptanspruchs hat demgegenüber den Vorteil, dass für den Fall, in dem für einen ersten Typ der Kopfinformationen in einer ersten Gruppe von Algorithmen ein erster Algorithmus und für einen zweiten Typ der Kopfinformationen in einer zweiten Gruppe von Algorithmen ein zweiter Algorithmus vorgesehen wird, wobei der erste Algorithmus dem zweiten Algorithmus entspricht, die Signalisierung für den ersten Typ der Kopfinformation und die Signalisierung für den zweiten Typ der Kopfinformation zu einer gemeinsamen Signalisierung zusammengefasst wird. Auf diese Weise kann die für die Übertragung der Signalisierung mit den entsprechenden Paketdateneinheiten zu übertragende Datenmenge reduziert werden, so dass die Datenrate für die Übertragung der Nutzdaten möglichst wenig durch die Übertragung der Signalisierung beeinträchtigt wird.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es dabei, dass Kopfinformationen unterschiedlicher Typen mit gemeinsamer Signalisierung in Abhängigkeit ihrer Signalisierung einem gemeinsamen Algorithmus der ersten Gruppe und der zweiten Gruppe von Algorithmen zugeführt werden. Auf diese Weise ist für solche Kopfinformationen keine zusätzliche Signalisierung erforderlich, um die Kopfinformationen einer der beiden Gruppen von Algorithmen vorab zuzuweisen, um anschließend anhand der weiteren Signalisierung den durchzuführenden Algorithmus in der vorselektierten Gruppe auszuwählen, so dass die beschriebene Einsparung an Datenmenge für die Signalisierung erreicht wird.

Vorteilhaft ist es auch, dass Kopfinformationen von mindestens zehn verschiedenen Typen durch eine 3Bit-Signalisierung signalisiert werden. Dies ist durch die gemeinsame Signalisierung von sechs der zehn verschiedenen Typen möglich und ergibt eine Einsparung von einem Bit gegenüber einer separaten Signalisierung eines jeden verschiedenen Typs von Kopfinformationen.

### Zeichnung

Ein Ausführungsbeispiel der Erfindung ist in der Zeichnung dargestellt und in der nachfolgenden Beschreibung näher erläutert. Es zeigen Figur 1 eine Paketdateneinheit mit Kopfinformationen eines ersten Typs, Figur 2 eine Paketdateneinheit mit Kopfinformationen eines zweiten Typs, Figur 3 eine Paketdateneinheit mit Kopfinformationen eines dritten Typs, Figur 4 eine Paketdateneinheit mit vorangestellter Signalisierung und Figur 5 ein Blockschaltbild eines Empfängers.

### Beschreibung des Ausführungsbeispiels

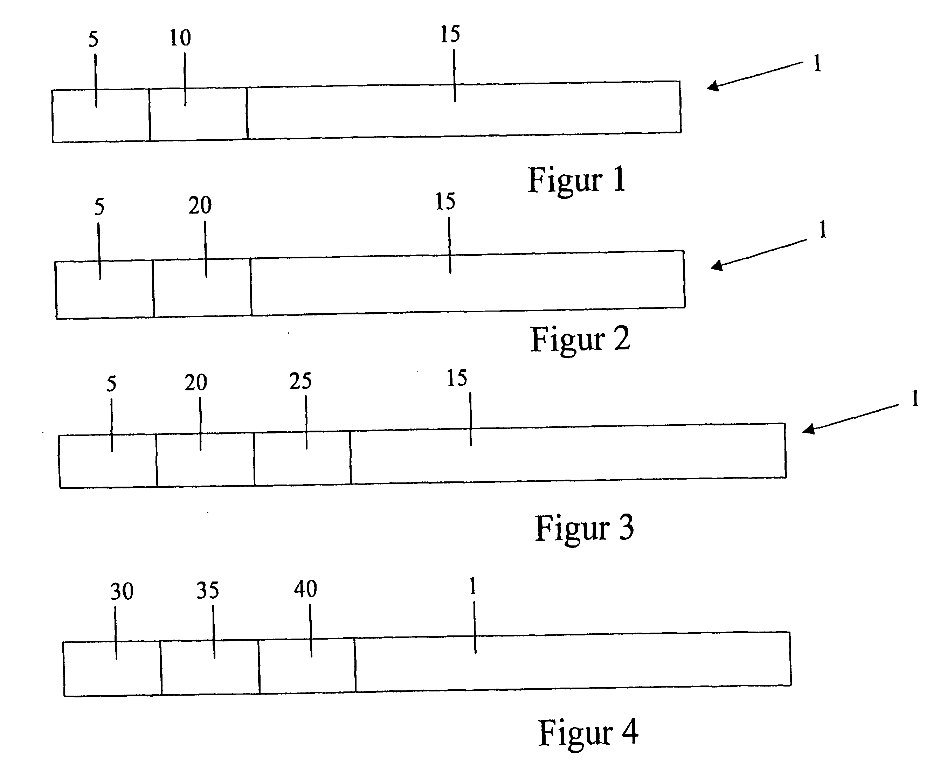

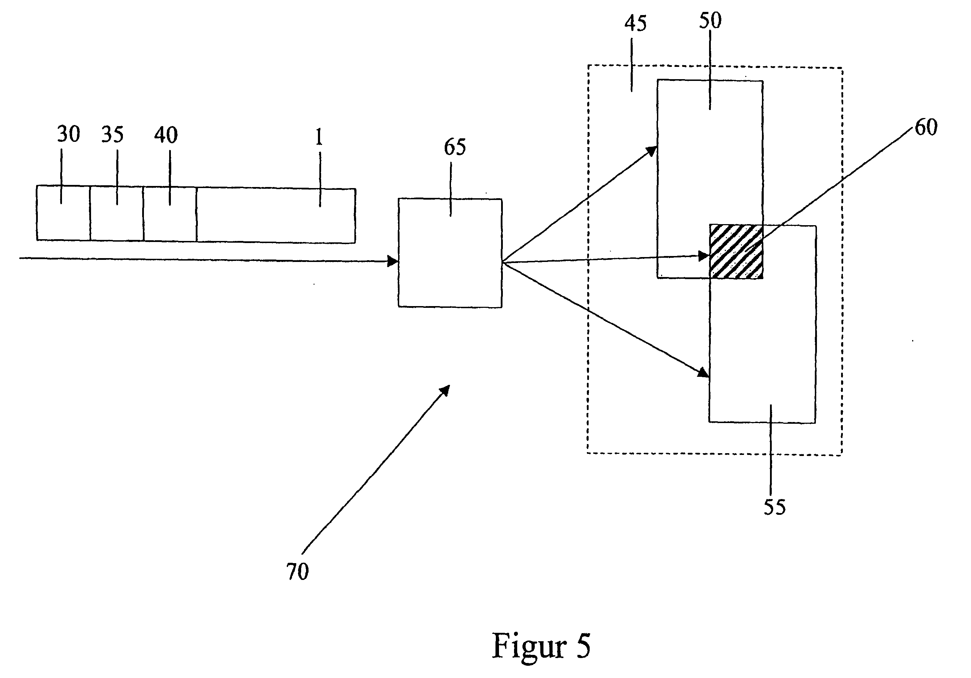

In paketvermittelnden Telekommunikationsnetzen werden Nutzdaten 15 gemäß Figur 1 in Form von Paketdateneinheiten 1 von einem Sender zu einem Empfänger 70 gemäß Figur 5 übertragen. Die Paketdateneinheiten 1 durchlaufen dabei eine Anzahl von Protokollschichten im Sender, bevor sie letztendlich versendet werden. Die einzelnen Protokollschichten fügen den Nutzdaten 15 dabei sogenannte Protokollkontrolldaten in Form von Kopfinformationen, die auch als "Header" bezeichnet werden, hinzu. Die Kopfinformationen sind gemäß Figur 1 mit den Bezugszeichen 5, 10 gekennzeichnet und bilden zusammen mit den Nutzdaten 15 die Paketdateneinheit 1 gemäß Figur 1. Die Kopfinformationen 5, 10 werden dabei beispielsweise dazu verwendet, die Paketdateneinheit 1 mit den Nutzdaten 15 durch das Telekommunikationsnetz zum Empfänger 70 zu leiten. Um die Datenmenge der Kopfinformationen 5, 10 zu reduzieren, werden Kompressionsalgorithmen im Sender verwendet. Die Kopfinformationen 5, 10 werden dann mit einem dieser Kompressionsalgorithmen komprimiert und auf diese Weise über das Telekommunikationsnetz zum Empfänger 70 mittels der Paketdateneinheit 1 übertragen. Im Empfänger 70 werden dann die Kopfinformationen 5, 10 durch einen Dekompressionsalgorithmus dekomprimiert, der die durch den verwendeten Kompressionsalgorithmus durchgeführte Kompression der Kopfinformationen 5, 10 rückgängig macht.

Beispielhaft wird im folgenden die IP-Protokollschicht (Internet Protokoll) eingeführt, die an die Daten von höheren Protokollschichten eine Kopfinformation in Form eines IP-Headers anhängt. Werden die Daten von einer höher gelegenen TCP-Protokollschicht (Transport Control Protocol) in der IP-Protokollschicht empfangen, so können diese Daten die Nutzdaten 15 und einen vorangestellten TCP-Header 10 umfassen. Dem TCP-Header 10 fügt dann die IP-Protokollschicht noch den IP-Header 5 an, so dass ein IP/TCP-Header 5, 10 gebildet und den Nutzdaten 15 gemäß Figur 1 vorangestellt wird. Entsprechend wird ein IP/UDP-Header 5, 20 (UDP = User Dataframe Protocol) den Nutzdaten 15 der Paketdateneinheit 1 vorangestellt, wenn die Daten von einer UDP-Protokollschicht in der IP-Protokollschicht empfangen wurden.

Um die Datenmenge der Kopfinformationen 5, 10, 20 zu reduzieren, werden Kompressionsalgorithmen im Sender verwendet. Die Kompression von Kopfinformationen 5, 10, 20, die auf dem Internetprotokoll (IP) basieren, sind in D2 und D3 beschrieben und werden im folgenden zur Erläuterung des erfindungsgemäßen Verfahrens kurz beschrieben.

D2 beschreibt ein Verfahren zur Kompression von IP-Headern 5 in Kombination mit TCP-Headern 10 oder UDP-Headern 20. Das Verfahren basiert auf dem einmaligen Versenden eines vollständigen solchermaßen kombinierten IP/TCP-Headers 5, 10 oder eines vollständigen IP/UDP-Headers 5, 20, der in einem Kompressor des Senders und einem Dekompressor 45 des Empfängers 70 unter einer bestimmten Kennung CID (Context Identifier) gespeichert wird. Die Header werden dabei natürlich jeweils mit der entsprechenden Paketdateneinheit 1 versendet. In den nachfolgenden Paketdateneinheiten werden dann mit den Kopfinformationen 5, 10, 20 solche Teile der Kopfinformationen nicht mehr übertragen, die sich nicht oder die sich konstant ändern. Teile von Kopfinformationen 5, 10, 20, die sich unvorhersehbar ändern, werden entweder vollständig mit der entsprechend zugehörigen Paketdateneinheit 1 zum Empfänger 70 übertragen oder es werden nur die Änderungen der Kopfinformationen 5, 10, 20 im Vergleich zur zuletzt gesendeten Paketdateneinheit zum Empfänger 70 übertragen. Die im Dekompressor 45 gemäß Figur 5 unter der jeweils zugeordneten Kennung CID gespeicherten Kopfinformationen 5, 10, 20 werden dann anhand der mit den nachfolgend übertragenen Paketdateneinheiten 1 empfangenen Kopfinformationen 5, 10, 20 aktualisiert bzw. auf den neuesten Stand gebracht. In D2 sind folgende verschiedene Typen von Kopfinformationen 5, 10, 20 definiert:
1. Regular Header für unkomprimierte auf dem IP basierende Kopfinformationen, wie beispielsweise IP/TCP-Kopfinformationen 5, 10 gemäß Figur 1 oder IP/UDP-Kopfinformationen 5, 20 gemäß Figur 2, die keine weiteren kompressionsbezogenen Informationen beinhalten (Typ 1).
2. Full Header für unkomprimierte IP/TCP-Kopfinformationen 5, 10 oder unkomprimierte IP/UDP-Kopfinformationen 5, 20 mit zusätzlichen kompressionsbezogenen Informationen (Typ 2).
3. Compressed_TCP für komprimierte IP/TCP-Kopfinformationen gemäß Figur 1 (Typ 3).
4. Compressed_TCP_NON_DELTA für Kopfinformationen 5, 10, 20, in denen nur die sich nicht oder die sich konstant ändernden Informationen weggelassen werden, in denen jedoch alle anderen Informationen vollständig und komprimiert gesendet werden (Typ 4).
5. Compressed_NON-TCP für komprimierte Kopfinformationen 5, 20, die keine IP-TCP-Kopfinformationen 5, 10 sind, sondern beispielsweise IP/UDP-Kopfinformationen 5, 20 gemäß Figur 2 (Typ 5).
6. Context_state für Kopfinformationen, die vom Empfänger 70 zum Sender bzw. vom Dekompressor 45 zum Kompressor als Rückmeldung und zur Synchronisation von im Dekompressor 45 gespeicherten Kopfinformationen zurückgesendet werden und für das erfindungsgemäße Verfahren keine Rolle spielen (Typ 6).

Kopfinformationen vom Typ 1 sind nicht komprimiert. Kopfinformationen vom Typ 2 stellen vollständige Kopfinformationen dar, die im Dekompressor 45 unter der zugehörigen Kennung CID gespeichert werden sollen. Kopfinformationen der Typen 3, 4, 5 sind komprimierte Kopfinformationen und Kopfinformationen vom Typ 6 werden für Synchronisationszwecke der im Dekompressor 45 gespeicherten Kopfinformationen verwendet und vom Dekompressor 45 des Empfängers zum Kompressor des Senders gesendet.

Das in D3 beschriebene Verfahren basiert auf dem in D2 beschriebenen Verfahren, gilt jedoch nur für Paketdateneinheiten 1, deren Nutzdaten 15 in einer RTP-Protokollschicht (Real Time Protocol) eine RTP-Kopfinformation 25 gemäß Figur 3 vorangestellt wurde. In der darunterliegenden UDP-Protokollschicht wurde der so gebildeten Paketdateneinheit weiterhin eine UDP-Kopfinformation 20 vorangestellt. In der darunterliegenden IP-Protokollschicht wurde der so in der UDP-Protokollschicht gebildeten Paketdateneinheit weiterhin eine IP-Kopfinformation 5 vorangestellt, so dass sich die in Figur 3 dargestellte Paketdateneinheit 1 ergibt. Die dort dargestellten Kopfinformationen 5, 20, 25 können auch als IP/UDP/RTP-Kopfinformationen bezeichnet werden. Dabei werden folgende Typen von IP/UDP/RTP-Kopfinformationen 5, 20, 25 unterschieden:
1. Regular Header für unkomprimierte auf dem IP basierende Kopfinformationen, wie beispielsweise IP/TCP-Kopfinformationen 5, 10 gemäß Figur 1 oder IP/UDP-Kopfinformationen 5, 20 gemäß Figur 2, die keine weiteren kompressionsbezogenen Informationen beinhalten (Typ 7).
2. Full Header für unkomprimierte IP/TCP-Kopfinformationen 5, 10 oder unkomprimierte IP/UDP-Kopfinformationen 5, 20 mit zusätzlichen kompressionsbezogenen Informationen (Typ 8).
3. Compressed_RTP für komprimierte IP/UDP/RTP-Kopfinformationen 5, 20, 25 (Typ 9).
4. Compressed_UDP für Kopfinformationen, in denen nur der IP/UDP-Header 5, 20, nicht aber der RTP-Header 25 komprimiert wurde (Typ 10).
5. Compressed_NON_TCP für komprimierte Kopfinformationen, die nicht IP/UDP/RTP-Kopfinformationen 5, 20, 25 sind (Typ 11) .
6. Context_state für Kopfinformationen, die vom Empfänger 70 zum Sender bzw. vom Dekompressor 45 zum Kompressor als Rückmeldung und zur Synchronisation von im Dekompressor 45 gespeicherten Kopfinformationen zurückgesendet werden und für das erfindungsgemäße Verfahren keine Rolle spielen (Typ 12).

Werden nun Paketdateneinheiten 1 vom Sender, der den Kompressor enthält, zum Empfänger 70, der den Dekompressor 45 enthält, versendet, so muß dem Dekompressor 45 mitgeteilt werden, welche Art von Kopfinformationen bzw. welchen Typ von Kopfinformationen er gerade empfängt. Dazu wird üblicherweise eine Signalisierung 30, 35, 40 verwendet, die der zu versendenden Paketdateneinheit 1 hinzugefügt bzw. vorangestellt wird, wie in Figur 4 dargestellt.

Nun ist es denkbar, dass zum Empfänger 70 sowohl Paketdateneinheiten 1 mit IP/TCP-Kopfinformationen 5, 10 oder mit IP/UDP-Kopfinformationen 5, 20 als auch mit IP/UDP/RTP-Kopfinformationen 5, 20, 25 gesendet werden. Um eine Auswertung oder Dekompression von Kopfinformationen aller im Dekompressor 45 empfangbaren Typen von Kopfinformationen zu ermöglichen, müssen diese Typen durch die Signalisierung 30, 35, 40 unterschieden werden. Dabei stehen gemäß Figur 5 im Dekompressor 45 eine erste Gruppe 50 von Algorithmen zur Auswertung oder Dekompression von Kopfinformationen der Typen 1 bis 5 und eine zweite Gruppe 55 von Algorithmen zur Auswertung oder Dekompression von Kopfinformationen der Typen 7 bis 11 zur Verfügung. Für Kopfinformationen nach Typ 6 oder nach Typ 12 müssen keine Algorithmen im Dekompressor 45 vorgesehen werden, da diese Kopfinformationen vom Dekompressor 45 des Empfängers 70 zum Kompressor des Senders gesendet werden. Um die zehn im Dekompressor 45 auswertbaren oder dekomprimierbaren Typen von Kopfinformationen eindeutig signalisieren zu können, waren bislang 4 Bits erforderlich, wobei ein Bit zur Auswahl der für die Auswertung oder Dekompression der jeweiligen Kopfinformation erforderlichen Gruppe 50, 55 von Algorithmen benötigt wurde. Die übrigen drei Bit wurden zur Unterscheidung von fünf verschiedenen Algorithmen in jeder der beiden Gruppen 50, 55 benötigt, um die fünf in der entsprechenden Gruppe von Algorithmen auswertbaren oder dekomprimierbaren Typen von Kopfinformationen dem entsprechend geeigneten Algorithmus zur Auswertung oder Dekompression zuzuführen. Somit mußten bislang mit jeder Paketdateneinheit 1 vier Bit für die Signalisierung übertragen werden.

Erfindungsgemäß wird nun die Tatsache ausgenutzt, dass für die Auswertung oder Dekompression von Kopfinformationen der Typen 1, 2 und 5 Algorithmen in der ersten Gruppe 50 von Algorithmen vorgesehen sind, die dem jeweiligen Algorithmus zur Auswertung oder Dekompression von Kopfinformationen der Typen 7, 8 und 11 in der zweiten Gruppe 55 entsprechen. Auf diese Weise ergibt sich im Dekompressor 45 eine dritte Gruppe 60 mit Algorithmen, die für verschiedene Typen von Kopfinformationen gemeinsam genutzt werden können und somit eine Schnittmenge der beiden Gruppen 50, 55 von Algorithmen bildet. So enthält die dritte Gruppe 60 mit gemeinsamen Algorithmen einen ersten Algorithmus zur Auswertung von Kopfinformationen nach Typ 1 und Typ 7, einen zweiten Algorithmus zur Auswertung von Kopfinformationen nach Typ 2 und Typ 8 und einen dritten Algorithmus zur Dekompression von Kopfinformationen nach Typ 5 und Typ 11. Die übrigen Typen von Kopfinformationen müssen dabei in der bereits beschriebenen Weise entweder durch einen Algorithmus der ersten Gruppe 50 von Algorithmen oder durch einen Algorithmus der zweiten Gruppe 55 von Algorithmen ausgewertet oder dekomprimiert werden. Die Kopfinformationen der Typen 3 und 4 werden dabei durch jeweils einen Algorithmus dekomprimiert, der nur in der ersten Gruppe 50 von Algorithmen vorliegt, wohingegen Kopfinformationen der Typen 9 und 10 durch jeweils einen Algorithmus dekomprimiert werden, der lediglich in der zweiten Gruppe 55 von Algorithmen vorliegt.

Auf diese Weise ist es möglich, jeweils eine gemeinsame Signalisierung für die Typen 1 und 7 der Kopfinformationen, für die Typen 2 und 8 der Kopfinformationen und für die Typen 5 und 11 der Kopfinformationen zu verwenden, so dass insgesamt drei gemeinsame Signalisierungen und für die Typen 3, 4, 9, 10 vier weitere Signalisierungen, also insgesamt sieben verschiedene Signalisierungen erforderlich sind, so dass für die Signalisierung drei Bit ausreichen. Ein erstes Signalisierungsbit ist dabei gemäß Figur 4 und Figur 5 durch das Bezugszeichen 30, ein zweites Signalisierungsbit durch das Bezugszeichen 35 und ein drittes Signalisierungsbit durch das Bezugszeichen 40 gekennzeichnet.

Dies ist besonders vorteilhaft für Telekommunikationsnetze, die als Mobilfunknetze ausgebildet sind und beispielsweise nach dem GSM-Standard (Global Systems for Mobile Communications) oder nach dem UMTS-Standard (Universal Mobile Telecommunications System) realisiert sind und bei denen nur eine begrenzte Bandbreite bzw. Datenrate zur Übertragung der Paketdateneinheiten zur Verfügung steht.

Eine Auswertung der Signalisierung 30, 35, 40 findet im Empfänger in einer entsprechenden Auswerteeinheit 65 statt, die in Abhängigkeit der detektierten Signalisierung die empfangene Paketdateneinheit 1 entweder zur ersten Gruppe 50, zur zweiten Gruppe 55 oder zur dritten Gruppe 60 von Algorithmen zur Auswertung oder Dekompression weiterleitet.

Im folgenden wird anhand einer Tabelle ein Beispiel zur Zuordnung der Signalisierungsbits 30, 35, 40 zu den einzelnen Typen von Kopfinformationen angegeben:

| Signalisierungsbits | | | Typ |
|---|---|---|---|
| 30 | 35 | 40 | Typ 1, Typ 7 |
| 0 | 0 | 0 | Typ 2, Typ 8 |
| 0 | 0 | 1 | Typ 5, Typ 11 |
| 0 | 1 | 0 | Typ 3 |
| 0 | 1 | 1 | Typ 4 |
| 1 | 0 | 0 | Typ 9 |
| 1 | 0 | 1 | Typ 10 |

## Patentansprüche

1. Verfahren zur Signalisierung unterschiedlicher Kopfinformationen (5, 10, 20, 25) bei der Übertragung von Paketdateneinheiten (1) in einem Telekommunikationsnetz in Abhängigkeit eines Typs der jeweiligen Kopfinformation (5, 10, 20, 25), wobei eine in einem Empfänger (70) des Telekommunikationsnetzes empfangene Kopfinformation (5, 10, 20, 25) in Abhängigkeit ihrer Signalisierung (30, 35, 40) einer von mindestens zwei Gruppen (50, 55) von Algorithmen für eine Auswertung zugeführt wird und wobei für einen ersten Typ der Kopfinformationen (5, 10, 20, 25) in einer ersten Gruppe (50) von Algorithmen ein erster Algoritmus und für einen zweiten Typ der Kopfinformationen (5, 10, 20, 25) in einer zweiten Gruppe (55) von Algorithmen ein zweiter Algorithmus vorgesehen wird, wobei der erste Algorithmus dem zweiten Algorithmus entspricht, **dadurch gekennzeichnet, daß** die Signalisierung (30, 35, 40) für den ersten Typ der Kopfinformationen (5, 10, 20, 25) und die Signalisierung (30, 35, 40) für den zweiten Typ der Kopfinformationen (5, 10, 20, 25) zu einer gemeinsamen Signalisierung zusammengefaßt wird.

2. Verfahren nach Anspruch 1, **dadurch gekennzeichnet, daß** die Signalisierung (30, 35, 40) der Paketdateneinheit (1) vorangestellt übertragen wird.

3. Verfahren nach Anspruch 1 oder 2, **dadurch gekennzeichnet, daß** komprimierte Kopfinformationen (5, 10, 20, 25) unterschiedlicher Protokolle mit unterschiedlicher Signalisierung (30, 35, 40) in Abhängigkeit ihrer Signalisierung (30, 35, 40) einem Algorithmus einer der mindestens zwei Gruppen (50, 55) von Algorithmen zur Dekompression zugeführt werden.

4. Verfahren nach Anspruch 3, **dadurch gekennzeichnet, daß** komprimierte Kopfinformationen (5, 10, 20, 25) eines Protokolls IP (Internet Protocol)/TCP (Transport Control Protocol) in Abhängigkeit ihrer Signalisierung (30, 35, 40) einem Algorithmus der ersten Gruppe (50) von Algorithmen zur Dekompression zugeführt werden.

5. Verfahren nach Anspruch 3, **dadurch gekennzeichnet, daß** komprimierte Kopfinformationen (5, 10, 20, 25) eines Protokolls IP/UDP (User Dataframe Protocol)/RTP (Real Time Protocol) in Abhängigkeit ihrer Signalisierung (30, 35, 40) einem Algorithmus der zweiten Gruppe (55) von Algorithmen zur Dekompression zugeführt werden.

6. Verfahren nach einem der vorherigen Ansprüche, **dadurch gekennzeichnet, daß** Kopfinformationen (5, 10, 20, 25) unterschiedlicher Typen mit gemeinsamer Signalisierung in Abhängigkeit ihrer Signalisierung (30, 35, 40) einem gemeinsamen Algorithmus der ersten Gruppe (50) und der zweiten Gruppe (55) von Algorithmen zugeführt werden.

7. Verfahren nach Anspruch 6, **dadurch gekennzeichnet, daß** unkomprimierte Kopfinformationen (5, 10, 20, 25) unterschiedlicher Typen mit gemeinsamer Signalisierung in Abhängigkeit ihrer Signalisierung (30, 35, 40) einem gemeinsamen Algorithmus der ersten Gruppe (50) und der zweiten Gruppe (55) von Algorithmen zugeführt werden.

8. Verfahren nach Anspruch 6 oder 7, **dadurch gekennzeichnet, daß** komprimierte Kopfinformationen (5, 10, 20, 25) unterschiedlicher Typen mit gemeinsamer Signalisierung in Abhängigkeit ihrer Signalisierung (30, 35, 40) einem gemeinsamen Algorithmus der ersten Gruppe (50) und der zweiten Gruppe (55) von Algorithmen zur Dekompression zugeführt werden.

9. Verfahren nach Anspruch 8, **dadurch gekennzeichnet, daß** komprimierte Kopfinformationen (5, 10, 20, 25) eines Protokolls IP/UDP in Abhängigkeit ihrer Signalisierung (30, 35, 40) einem gemeinsamen Algorithmus der ersten Gruppe (50) und der zweiten Gruppe (55) von Algorithmen zur Dekompression zugeführt werden.

10. Verfahren nach einem der vorherigen Ansprüche, **dadurch gekennzeichnet, daß** Kopfinformationen (5, 10, 20, 25) von mindestens zehn verschiedenen Typen durch eine 3 Bit Signalisierung (30, 35, 40) signalisiert werden.

## Claims

1. Method for signalling different header information (5, 10, 20, 25) when transmitting packet data units (1) in a telecommunication network on the basis of a type for the respective header information (5, 10, 20, 25), where a header information item (5, 10, 20, 25) received in a receiver (70) in the telecommunication network is supplied, on the basis of its signalling (30, 35, 40), to one of at least two groups (50, 55) of algorithms for evaluation, and where a first algorithm is provided for a first type of header information (5, 10, 20, 25) in a first group (50) of algorithms, and a second algorithm is provided for a second type of header information (5, 10, 20, 25) in a second group (55) of algorithms, the first algorithm corresponding to the second algorithm, **characterized in that** the signalling (30, 35, 40) for the first type of header information (5, 10, 20, 25) and the signalling (30, 35, 40) for the second type of header information (5, 10, 20, 25) are combined to form common signalling.

2. Method according to Claim 1, **characterized in that** the signalling (30, 35, 40) is transmitted ahead of the packet data unit (1).

3. Method according to Claim 1 or 2, **characterized in that** compressed header information (5, 10, 20, 25) from different protocols with different signalling (30, 35, 40) is supplied, on the basis of its signalling (30, 35, 40), to an algorithm from one of the at least two groups (50, 55) of algorithms for decompression.

4. Method according to Claim 3, **characterized in that** compressed header information (5, 10, 20, 25) from a protocol IP (Internet Protocol)/TCP (Transport Control Protocol) is supplied, on the basis of its signalling (30, 35, 40), to an algorithm from the first group (50) of algorithms for decompression.

5. Method according to Claim 3, **characterized in that** compressed header information (5, 10, 20, 25) from a protocol IP/UDP (User Dataframe Protocol)/RTP (Real Time Protocol) is supplied, on the basis of its signalling (30, 35, 40), to an algorithm from the second group (55) of algorithms for decompression.

6. Method according to one of the preceding claims, **characterized in that** header information (5, 10, 20, 25) of different types with common signalling is supplied, on the basis of its signalling (30, 35, 40), to a common algorithm from the first group (50) and from the second group (55) of algorithms.

7. Method according to Claim 6, **characterized in that** uncompressed header information (5, 10, 20, 25) of different types with common signalling is supplied, on the basis of its signalling (30, 35, 40), to a common algorithm from the first group (50) and from the second group (55) of algorithms.

8. Method according to Claim 6 or 7, **characterized in that** compressed header information (5, 10, 20, 25) of different types with common signalling is supplied, on the basis of its signalling (30, 35, 40), to a common algorithm from the first group (50) and from the second group (55) of algorithms for decompression.

9. Method according to Claim 8, **characterized in that** compressed header information (5, 10, 20, 25) from a protocol IP/UDP is supplied, on the basis of its signalling (30, 35, 40), to a common algorithm from the first group (50) and from the second group (55) of algorithms for decompression.

10. Method according to one of the preceding claims, **characterized in that** header information (5, 10, 20, 25) of at least ten different types is signalled using 3-bit signalling (30, 35, 40).

## Revendications

1. Procédé pour signaler différentes informations d'en-tête (5, 10, 20, 25) lors de la transmission d'unités de données en paquets (1) dans un réseau de télécommunications en fonction d'un type d'informations d'en-tête (5, 10, 20, 25), selon lequel une information d'en-tête (5, 10, 20, 25) reçue dans un récepteur (70) du réseau de télécommunications est envoyée pour exploitation en fonction de sa signalisation (30, 35, 40) à au moins un des deux groupes (50, 55) d'algorithmes, et un premier algorithme est prévu dans un premier groupe (50) d'algorithmes pour un premier type d'informations d'en-tête (5, 10, 20, 25) et un deuxième algorithme est prévu dans un deuxième groupe (55) d'algorithmes pour un deuxième type d'informations d'en-tête (5, 10, 20, 25), le premier algorithme correspondant au deuxième algorithme,
**caractérisé en ce que**
la signalisation (30, 35, 40) pour le premier type d'informations d'entête (5, 10, 20, 25) et la signalisation (30, 35, 40) pour le deuxième type d'informations d'en-tête (5, 10, 20, 25) sont rassemblées en une signalisation commune.

2. Procédé selon la revendication 1,
**caractérisé en ce que**
la signalisation (30, 35, 40) est transmise en tête de l'unité de données en paquets (1).

3. Procédé selon la revendication 1 ou 2,
**caractérisé en ce que**
des informations d'en-tête comprimées (5, 10, 20, 25) de différents protocoles comportant une signalisation différente (30, 35, 40) sont envoyées en fonction de leur signalisation (30, 35, 40) à un algorithme d'au moins un des deux groupes (50, 55) d'algorithmes en vue de leur décompression.

4. Procédé selon la revendication 3,
**caractérisé en ce que**
des informations d'en-tête comprimées (5, 10, 20, 25) d'un protocole IP (Protocole d'Internet)/TCP (Protocole de Contrôle de Transmission) sont envoyées en fonction de leur signalisation (30, 35, 40) à un algorithme du premier groupe (50) d'algorithmes en vue de leur décompression.

5. Procédé selon la revendication 3,
**caractérisé en ce que**
des informations d'en-tête comprimées (5, 10, 20, 25) d'un protocole IP/UDP (Protocole de Datagramme Utilisateur)/RTP (Protocole de Transmission en Temps Réel) sont envoyées en fonction de leur signalisation (30, 35, 40) à un algorithme du deuxième groupe (55) d'algorithmes en vue de leur décompression.

6. Procédé selon l'une quelconque des revendications précédentes,
**caractérisé en ce que**
des informations d'en-tête (5, 10, 20, 25) de différents types comportant une signalisation commune sont envoyées en fonction de leur signalisation (30, 35, 40) à un algorithme commun du premier groupe (50) et du deuxième groupe (55) d'algorithmes.

7. Procédé selon la revendication 6,
**caractérisé en ce que**
des informations d'en-tête non comprimées (5, 10, 20, 25) de différents types avec une signalisation commune sont envoyées en fonction de leur signalisation (30, 35, 40) à un algorithme commun du premier groupe (50) et du deuxième groupe (55) d'algorithmes.

8. Procédé selon la revendication 6 ou 7,
**caractérisé en ce que**
des informations d'en-tête comprimées (5, 10, 20, 25) de différents types avec une signalisation commune sont envoyées en fonction de leur signalisation (30, 35, 40) à un algorithme commun du premier groupe (50) et du deuxième groupe (55) d'algorithmes en vue de leur décompression.

9. Procédé selon la revendication 8,
**caractérisé en ce que**
des informations d'en-tête comprimées (5, 10, 20, 25) d'un protocole IP/UDP sont envoyées en fonction de leur signalisation (30, 35, 40) à un algorithme commun du premier groupe (50) et du deuxième groupe (55) d'algorithmes en vue de leur décompression.

10. Procédé selon l'une quelconque des revendications précédentes,
**caractérisé en ce que**
des informations d'en-tête (5, 10, 20, 25) d'au moins dix types différents sont signalées par une signalisation à 3 bits (30, 35, 40).
